# EUROPEAN PATENT SPECIFICATION

(11) **EP 2 296 467 B1**
(45) Date of publication and mention of the grant of the patent: **04.11.2015**
(21) Application number: 09767406.3
(22) Date of filing: 29.05.2009
(51) Int. Cl.: A01P 3/00, A01N 37/24, A01N 43/24, A01N 61/00, A01N 43/40

(54) **METHODS TO CONTROL QOI-RESISTANT FUNGAL PATHOGENS**
VERFAHREN FÜR DIE BEKÄMPFUNG VON QOI-RESISTENTEN PILZLICHEN PATHOGENEN
MÉTHODES DE LUTTE CONTRE DES PATHOGÈNES FONGIQUES RÉSISTANTS À UN QOI

(30) Priority: 30.05.2008 US 130431 P
(43) Date of publication of application: 23.03.2011
(73) Proprietor: Dow AgroSciences LLC, Indianapolis, IN 46268-1054 (US)
(72) Inventor: CARSON, Chris, Windsor, CA 95492 (US); KLITTICH, Carla, Zionsville IN 46077 (US); OWEN, William, John, Carmel IN 46033 (US); SCHOBERT, Christian, Salem VA 24153 (US); YOUNG, David, Carmel IN 46033 (US)
(74) Representative: Weickmann & Weickmann
(86) International application number: PCT/US2009/045639
(87) International publication number: WO 2009/155095

(56) References cited:
- EP-A1- 1 054 011
- EP-A1- 1 134 214
- JP-A- 8 198 719
- US-A1- 2004 106 578
- US-B1- 6 333 432
- ANASTASIOS A MALANDRAKIS ET AL: "Biological and molecular characterization of laboratory mutants of Cercospora beticola resistant to Qo inhibitors" EUROPEAN JOURNAL OF PLANT PATHOLOGY, KLUWER ACADEMIC PUBLISHERS, DO LNKD- DOI:10.1007/S10658-006-9052-1, vol. 116, no. 2, 22 August 2006 (2006-08-22), pages 155-166, XP019394916 ISSN: 1573-8469
- ANASTASIOS N MARKOGLOU ET AL: "Characterization of Laboratory Mutants of Botrytis cinerea Resistant to QoI Fungicides" EUROPEAN JOURNAL OF PLANT PATHOLOGY, KLUWER ACADEMIC PUBLISHERS, DO LNKD- DOI:10.1007/S10658-006-0008-2, vol. 115, no. 2, 21 June 2006 (2006-06-21), pages 149-162, XP019394867 ISSN: 1573-8469
- GISI ULRICH ET AL: "Mechanisms influencing the evolution of resistance to Qo inhibitor fungicides" PEST MANAGEMENT SCIENCE, vol. 58, no. 9, September 2002 (2002-09), pages 859-867, XP002590572 ISSN: 1526-498X DOI: 10.1002/ps.565

## Description

### CROSS-REFERENCE TO RELATED APPLICATIONS

This application claims the benefit of U.S. Provisional Patent Application No. 61/130,431, filed on May 30, 2008, which is expressly incorporated by reference herein.

### FIELD OF THE INVENTION

This invention relates to methods suitable for controlling fungal plant pathogens that are resistant to Qo inhibitors.

### BACKGROUND AND SUMMARY OF THE INVENTION

Qo inhibitor fungicides are conventionally used to control a number of fungal pathogens in crops. Qo inhibitors typically work by inhibiting respiration by binding to a ubihydroquinone oxidation center of a cytochrome bc1 complex in mitochondria. Said oxidation center is located on the outer side of the inner mitochrondrial membrane. A prime example of the use of Qo inhibitors includes the use of, for example, strobilurins on wheat for the control of *Septoria tritici* (Bayer code: SEPTTR, also known as *Mycosphaerella graminicola* ), which is the cause of wheat leaf blotch. Unfortunately, widespread use of such Qo inhibitors has resulted in the selection of mutant pathogens, containing a single amino acid residue substitution in their cytochrome bc1 complex, that are resistant to Qo inhibitors. *See,* for example, Lucas, J., "Resistance to Qol fungicides: implications for cereal disease management in Europe", Pesticide Outlook (2003), 14(6), 268-70 (which is expressly incorporated by reference herein) and Fraaije, B.A. et al., "Role of ascospores in further spread of QoI-resistant cytochrome b alleles (G143A) in field populations of Mycosphaerella graminicola", Phytopathology (2005), 95(8), 933-41 (which is expressly incorporated by reference herein). Thus, new methods and compositions are desirable for controlling pathogen induced diseases in crops comprising plants subjected to pathogens that are resistant to Qo inhibitors.

Fortunately, the present invention provides new methods of controlling a pathogen induced disease in a plant where the pathogen is resistant to a Qo inhibitor. The inventive methods comprise contacting a plant at risk of being diseased from a pathogen that is resistant to a Qo inhibitor with a composition comprising an effective amount of a Qi inhibitor. Qi inhibitors typically work by inhibiting respiration by binding to a ubihydroquinone oxidation center of a cytochrome bc1 complex in mitochondria, the said oxidation center being located on the inner side of the inner mitochrondrial membrane. Suitable Qi inhibitors include those selected from the group consisting of antimycins A and their synthetic mimics, such as the *N*-formylaminosalicylamides (FSAs)described in WO 9927783, the naturally occurring picolinamide UK2A as described in the Journal of Antibiotics, Issue 49(7), pages 639-643, 1996, synthetic and semisynthetic picolinamides such as those described in WO 0114339 and WO 0105769, and prodrugs, racemic mixtures, oxides, addition salts, metal or metalloid complexes, and derivatives thereof. In another embodiment, a suitable method of controlling a pathogen induced disease in a crop comprises first identifying one or more plants in the crop that are at risk of being diseased from a pathogen resistant to a Qo inhibitor and then contacting the crop with a composition comprising an effective amount of a Qi inhibitor. Suitable compositions for controlling a pathogen induced disease in a crop comprising one or more plants at risk of being diseased from a mixed population of pathogens resistant to a Qo inhibitor and pathogens sensitive to a Qo inhibitor include compositions comprising an effective amount of a Qo inhibitor and an effective amount of a Qi inhibitor.

### DETAILED DESCRIPTION OF THE INVENTION

### General Definitions

"Composition," as used herein, includes a mixture of materials which comprise the composition, as well as reaction products and decomposition products formed from the ingredients or materials of the composition.

"Qo inhibitor," as used herein, includes any substance that is capable of diminishing and/or inhibiting respiration by binding to a ubihydroquinone oxidation center of a cytochrome bc1 complex in mitochondria. The oxidation center is typically located on the outer side of the inner mitochrondrial membrane.

"Pathogen induced disease," as used herein, includes any abnormal condition that damages a plant and reduces its productivity or usefulness to man wherein said condition is caused by a pathogen. Typical symptoms may include visible abnormalities such as wilts, rots, and other types of tissue death, stunting, excessive growth, or abnormal color.

"Qi inhibitor," as used herein, includes any substance that is capable of diminishing and/or inhibiting respiration by binding to a ubihydroquinone oxidation center of a cytochrome bc1 complex in mitochondria. The oxidation center is typically located on the inner side of the inner mitochrondrial membrane.

### Processes

The present invention relates to methods of controlling a pathogen induced disease or diseases in one or more plants. The processes of the present invention are often effective in controlling said diseases in plants that are susceptible to a fungal pathogen that is at least partially resistant to a Qo inhibitor. It is not particularly important how said plant pathogen developed the at least partial resistance to Qo inhibitors but often the resistance is due to a mutation as described in Pest Management Science, Issue 58(7), pages 649-662, 2002, For example, in the case of *Septoria tritici* (SEPTTR) which causes wheat leaf blotch, a G143A mutation, in which a glycine at position 143 of the amino acid sequence of the cytochrome b is replaced with an alanine, may render the SEPTTR at least partially resistant to a conventional Qo inhibitor. Other such mutations in specific plant pathogens include, for example, an F129L mutation in which a phenylalanine at position 129 is replaced with a leucine.

The inventive methods comprise contacting a plant at risk of being diseased from a pathogen that is resistant to a Qo inhibitor with a composition comprising an effective amount of a Qi inhibitor. Plants at risk of being diseased from a pathogen that is resistant to a Qo inhibitor may be identified by observing a diminished ability to control the pathogen when a Qo inhibitor is employed. Alternatively, Qo inhibitor-resistant pathogens may be identified by testing for a genetic mutation that affects binding to a ubihydroquinone oxidation center of a cytochrome bc1 complex in mitochondria wherein the oxidation center is located on the outer side of the inner mitochrondrial membrane. Such a test might consist of extracting DNA from the isolated pathogen and analyzing for specific site mutations such as the G143A or F129L etc, using real time PCR techniques & gene sequencing techniques.

While not wishing to be bound by any theory it is believed that a Qi inhibitor may control or assist in controlling a Qo resistant fungal pathogen by diminishing and/or inhibiting respiration by binding to a ubihydroquinone oxidation center of a cytochrome bc 1 complex in mitochondria. Unlike Qo inhibitors, however, the oxidation center of the cytochrome bc1 complex to which Qi inhibitors bind is typically located on the inner side of the inner mitochrondrial membrane. In this manner, the fungal pathogen is controlled or eliminated.

Useful Qi inhibitors may vary depending upon the type of plant, the fungal pathogen and environmental conditions. Typical Qi inhibitors are selected from the group consisting of antimycins A and their synthetic mimics, such as the *N*-formylaminosalicylamides (FSAs), the naturally occurring picolinamide UK2A, synthetic and semisynthetic picolinamides, and prodrugs, racemic mixtures, oxides, addition salts, metal or metalloid complexes, and derivatives thereof. The aforementioned Qi inhibitors have been found to be useful in controlling pathogens such as those selected from the group consisting of basidomycetes, ascomycetes, and oomycetes. More specifically, the pathogen to be controlled is *Septoria tritici (also known as Mycosphaerella* graminicola).

The inventive process has been found particularly effective in controlling a pathogen induced disease caused by *Septora tritici* in wheat.

The exact amount of Qi inhibitor to be employed often depends upon, for example, the specific active ingredient being applied, the particular action desired, the type, number and growth stage of the plants, the fungal pathogen to be controlled, application conditions and whether delivery is targeting foliage, seeds or soil in which the plants are growing. Thus all Qi inhibitor fungicides, and formulations containing the same, may not be equally effective at similar concentrations or against the same pathogens.

Typically, a plant in need of fungal protection, control or elimination is contacted with an amount of from 0.1 to 2500, preferably from 1 to 750 ppm of a Qi inhibitor. The contacting may be in any effective manner. For example, any exposed part of the plant, e.g., leaves or stems may be sprayed with the Qi inhibitor. Similarly, the Qi inhibitor may be applied in a manner such that the roots, seeds, or one or more other unexposed parts of the plant take up the Qi inhibitor such that it controls or eliminates the fungal pathogen. As a foliar fungicide treatment, the exact dilution and rate of application will depend upon the type of equipment employed, the frequency of application desired and diseases to be controlled, but the effective amount of a Qi inhibitor fungicide is usually from 0.05 to 2.5, and preferably from 0.075 to 0.5 kg per hectare.

The compositions comprising an effective amount of Qi inhibitor may be mixed with one or more other active or inert ingredients. Preferable other active ingredients may include a Qo inhibitor, such as azoxystrobin, pyraclostrobin, fluoxastrobin, trifloxystrobin or picoxystrobin, dimoxystrobin, metominostrobin, orysastrobin, kresoxim-methyl, enestrobin, famoxadone, fenamidone, pyribencarb, an azole such as epoxiconazole, prothioconazole, myclobutanil, tebuconazole, propiconazole, cyproconazole or fenbuconazole or a METII site inhibitor such as boscalid, penthiopyrad, bixafen, isopyrazam, sedaxane, fluopyram, or thifluzamide or combinations thereof. By mixing the Qi inhibitor with a Qo inhibitor, the composition may control mixed populations comprising fungal pathogens that are mutated to be Qo resistant, as well as fungal pathogens that are unmutated and are susceptible to being controlled by Qo inhibitors. Other active ingredients that may be included with an effective amount of Qi inhibitor with or without a Qo inhibitor or fungicide from a different mode of action class, include compounds such as insectides and weed control agents.

### Example 1 - Sensitivity of wild type and strobilurin - resistant SEPTTR isolates to picolinamides and other Qi inhibitors

The naturally-occuring picolinamide UK2A, its profungicide derivative Compound 1, and 3 other Qi inhibitors - antimycin A, Compound 2 (a member of the *N-*formylaminosalicylamide (FSA) series), and Compound 3 (a member of a series of synthetic picolinamide mimics of UK2A), were tested for *in vitro* fungitoxicity towards SEPTTR field isolates LARS 15 and R2004-6 in a microtiter plate assay (Table 1). The Qo inhibitors azoxystrobin, kresoxim-methyl and famoxadone were included as standards. LARS 15 is sensitive to strobilurins, whereas R2004-6 contains the G143A mutation in cytochrome b which confers resistance to strobilurins.

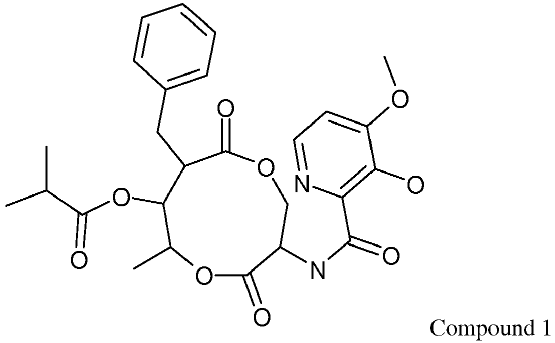

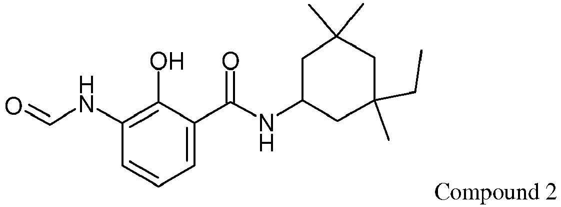

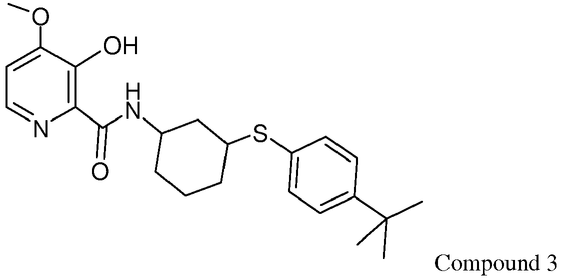

The Qo inhibitors were highly active against the LARS 15 strain but showed little or no activity against the QoI-resistant strain R2004-6. In contrast, UK-2A, Compound 1 and the other Qi inhibitors were highly active against both strains and in most cases showed slightly higher activity towards the strobilurin-resistant R2004-6 strain.

**Table 1. Sensitivity of SEPTTR isolates to picolinamides**

| | LARS 15 | | R2004-6 |
|---|---|---|---|
| Compound | Site of action | EC50 (ppm) | EC50 (ppm) |
| U K-2A | Qi | 0.037 | 0.029 |
| Compound 1 | Qi | 0.169 | 0.122 |
| Antimycin A | Qi | 0.021 | 0.011 |
| Compound 2 | Qi | 0.0006 | <0.0005 |
| Compound 3 | Qi | 0.049 | 0.059 |
| Azoxystrobin | Qo | 0.011 | 3.00 |
| | | | |
| Kresoxim-methyl | Qo | <0.005 | >5 |
| Famoxadone | Qo | 0.136 | >5 |

The UK-2A prodrug Compound 1 was used to demonstrate that a QiI fungicide can effectively control a wide range of QoI-resistant SEPTTR isolates obtained from field samples of wheat.

A panel of 31 SEPTTR isolates was used in *in vitro* fungitoxicity experiments. Most of the used isolates were isolated from wheat in the UK from 2001 to 2005. Table 2 lists mean EC50 values +/- SD for Compound 1 for the 17 QoI-sensitive isolates ('WT') and 14 QoI-resistant isolates ('G143A') in comparison to azoxystrobin and epoxiconazole. The results listed in Table 2 show that, on average, the Qo inhibitor azoxystrobin controls QoI-sensitive isolates 160 fold better than QoI-resistant isolates. Also the azole, epoxiconazole, was 1.7-fold less active against QoI-resistant isolates. On the other hand, the Qi inhibitor Compound 1 was 1.7-fold more active against QoI-resistant isolates.

**Table 2: In-vitro SEPTTR fungitoxicity of Azoxystrobin, Epoxiconazole and Compound 1 (mean EC₅₀ values in mcg ml⁻¹ +/- SD)**

| | **Azoxystrobin** | **Compound 1** | **Epoxiconazole** |
|---|---|---|---|
| **QoI-Sensitive(n=17)** | 0.057 | 0.035 | 0.351 |
| **+/- SD** | 0.029 | 0.021 | 0.509 |
| **QoI-resistant(n=14)** | 9.077 | 0.021 | 0.589 |
| **+/- SD** | 4.941 | 0.012 | 0.871 |

### Example 2 - Efficacy of Compound 1 in-planta against wild type and strobilurin-resistant SEPTTR

In-planta testing was performed on the second attached leaf of 16 day old wheat cultivar Riband, highly susceptible to SEPTTR. Wheat leaves were sprayed with a dilution series of Compound 1 (as an SC formulation) or the azoxystrobin-containing fungicide Amistar. The next day, treated leaves were inoculated with either the QoI-sensitive isolates (S27 or Lars 15-03) or the QoI-resistant isolates (G3-03 or TwistB-02). Visual inspection 21 days after inoculation revealed Amistar control of S27 and Lars 15-03 at 0.9 ppm and 2.8 ppm, respectively. No control was evident for G3-03 and TwistB-02 at 25 ppm.

Breaking rates for control of the QoI-sensitive isolates S27 and Lars 15-03 with compound 1 were 0.3 ppm and 2.8 ppm, respectively. The QoI-resistant isolates G3-03 and TwistB-02 were controlled at 0.9 ppm and 0.3 ppm.

Table 3 summarizes the results for 5 QoI-sensitive and 6 QoI-resistant strains. Amistar (azoxystrobin) control was evident for QoI-sensitive isolates with breaking rates ranging from 0.1 ppm to 8.3 ppm. Amistar did not control any of the tested QoI-resistant isolates. Even at the highest rate used (25 ppm) all leaves were infected with SEPTTR. On the other hand, the SC formulation of Compound 1, controlled both QoI-sensitive and QoI-resistant isolates with high efficacy and breaking rates ranged from 0.3 ppm to 0.9 ppm.

**Table 3: In-planta control of QoI-sensitive and QoI-resistant SEPTTR isolates by Amistar and SC Formulation including Compound 1. The breaking rates (ppm) for control of SEPTTR infection were based on visual inspection.**

| **QoI** | **Isolate** | **Amistar** | | **SC Form. w/ Comp. 1** |
|---|---|---|---|---|
| S | Ctrl30- | 2.8 | | 0.9 |
| S | Flu 1-02 | 8.3 | | 0.3 |
| S | IPO323 | Between 0.1 and 8.3 | | 0.3 |
| S | Lars15-03 | Between 0.9 and 2.8 | | Between 0.3 and 2.8 |
| S | S27 | 0.9 | | 0.3 |
| R | Flu4-02 | >25 | | 0.3 |
| R | G3-03 | >25 | | Between 0.3 and 0.9 |
| R | Lars11-03 | >25 | | 0.9 |
| R | Lars8-03 | >25 | | 0.9 |
| R | TwistAD5-02 | >25 | | 0.9 |
| R | TwistB-02 | >25 | | Between 0.3 and 0.9 |

## Claims

1. A method of controlling a pathogen induced disease in a crop comprising identifying one or more plants at risk of being diseased from a pathogen resistant to a Qo inhibitor and contacting said one or more plants with a composition comprising an effective amount of a Qi inhibitor, wherein the pathogen induced disease is *Septoria tritici,* also known as *Mycosphaerella graminicola.*

2. The method of claim 1, wherein the Qi inhibitors are selected from the group consisting of antimycin A, synthetic mimics of antimycin A, naturally occurring picolinamide UK2A, synthetic picolinamides, semisynthetic picolinamides, prodrugs, racemic mixtures, oxides, addition salts, metal complexes, metalloid complexes, and derivatives thereof.

3. The method of claim 1, wherein the crop is wheat.

4. The method of claim 3, wherein the crop is contacted with from 0.1 ppm to 2500 ppm of a Qi inhibitor.

5. The method of claim 4, wherein the crop comprises leaves and the plant is contacted with the Qi inhibitor by spraying said leaves.

6. The method of claim 1, wherein the composition further comprises a fungicide selected from the group consisting of azoxystrobin, pyraclostrobin, fluoxastrobin, trifloxystrobin, picoxystrobin, epoxiconazole, prothioconazole, myclobutanil, tebuconazole, propiconazole, cyproconazole, fenbuconazole, boscalid, penthiopyrad, bixafen, isopyrazam, sedaxane, fluopyram, thifluzamide or combinations thereof.

7. The method of claim 1, wherein the composition further comprises an insecticide.

8. The method of claim 1, wherein the composition further comprises a weed control agent.

9. The method of claim 1, wherein the Qi inhibitor is picolinamide UK-2A, 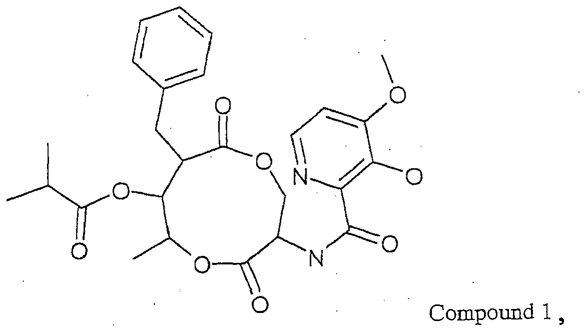 antimycin A, 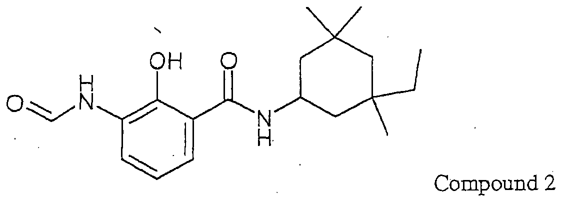 or

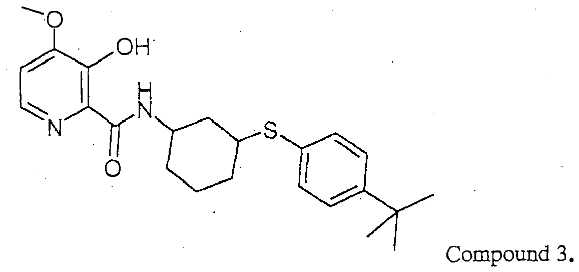

## Patentansprüche

1. Verfahren zur Kontrolle einer pathogeninduzierten Krankheit in einer Anbaupflanze umfassend Identifizieren einer oder mehrerer Pflanzen, die gefährdet sind durch ein Pathogen, das resistent gegen einen Qo-Inhibitor ist, zu erkranken und Inkontaktbringen der einen oder mehreren Pflanzen mit einer Zusammensetzung, die eine wirksame Menge eines Qi-Inhibitors umfasst, wobei die pathogeninduzierte Krankheit *Septoria tritici,* auch bekannt als *Mycosphaerella graminicola* ist.

2. Verfahren nach Anspruch 1, wobei die Qi-Inhibitoren ausgewählt sind aus der Gruppe bestehend aus Antimycin A, synthetischen Nachahmern von Antimycin A, natürlich vorkommendem Picolinamid UK2A, synthetischen Picolinamiden, semisynthetischen Picolinamiden, Prodrugs, racemischen Mischungen, Oxiden, Additionssalzen, Metallkomplexen, metalloiden Komplexen und Derivaten davon.

3. Verfahren nach Anspruch 1, wobei die Anbaupflanze Weizen ist.

4. Verfahren nach Anspruch 3, wobei die Anbaupflanze mit von 0,1 ppm bis 2500 ppm eines Qi-Inhibitors in Kontakt gebracht wird.

5. Verfahren nach Anspruch 4, wobei die Anbaupflanze Blätter umfasst und die Pflanze mit dem Qi-Inhibitor durch Besprühen der Blätter in Kontakt gebracht wird.

6. Verfahren nach Anspruch 1, wobei die Zusammensetzung weiter ein Fungizid ausgewählt aus der Gruppe bestehend aus Azoxystrobin, Pyraclostrobin, Fluoxastrobin, Trifloxystrobin, Picoxystrobin, Epoxiconazol, Prothioconazol, Myclobutanil, Tebuconazol, Propiconazol, Cyproconazol, Fenbuconazol, Boscalid, Penthiopyrad, Bixafen, Isopyrazam, Sedaxan, Fluopyram, Thifluzamid oder Kombinationen davon umfasst.

7. Verfahren nach Anspruch 1, wobei die Zusammensetzung weiterhin ein Insektizid umfasst.

8. Verfahren nach Anspruch 1, wobei die Zusammensetzung weiterhin ein Unkrautbekämpfungsmittel umfasst.

9. Verfahren nach Anspruch 1, wobei der Qi-Inhibitor das Picolinamid UK-2A, 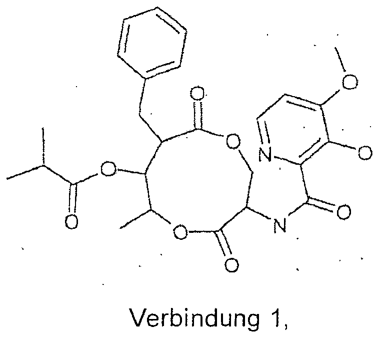 Antimycin A, 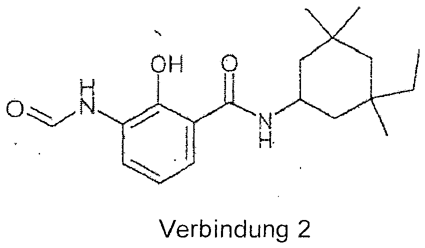 oder 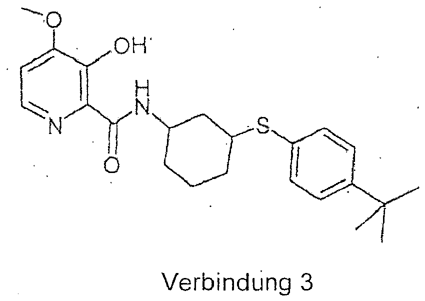 ist.

## Revendications

1. Procédé de lutte contre une maladie causée par un agent pathogène chez une plante cultivée, comprenant l'identification d'une ou de plusieurs plante(s) à risque d'être attaquée(s) par un agent pathogène résistant à un inhibiteur Qo et la mise en contact de ladite une ou desdites plusieurs plante(s) avec une composition comprenant une quantité efficace d'un inhibiteur Qi, la maladie causée par un agent pathogène étant causée par *Septoria tritici,* également connu sous le nom de *Mycosphaerella graminicola.*

2. Procédé selon la revendication 1, dans lequel les inhibiteurs Qi sont choisis dans le groupe constitué par l'antimycine A, des agents mimétiques synthétiques d'antimycine A, le picolinamide UK2A existant dans la nature, des picolinamides synthétiques, des picolinamides semi-synthétiques, des précurseurs de médicaments, des mélanges racémiques, des oxydes, des sels d'addition, des complexes métalliques, des complexes de métalloïdes, et des dérivés de ceux-ci.

3. Procédé selon la revendication 1, dans lequel la plante cultivée est le blé.

4. Procédé selon la revendication 3, dans lequel on met la plante cultivée en contact avec de 0,1 ppm à 2 500 ppm d'un inhibiteur Qi.

5. Procédé selon la revendication 4, dans lequel la plante cultivée comporte des feuilles et on met la plante en contact avec l'inhibiteur Qi par pulvérisation sur lesdites feuilles.

6. Procédé selon la revendication 1, dans lequel la composition comprend en outre un fongicide choisi dans le groupe constitué par l'azoxystrobine, la pyraclostrobine, la fluoxastrobine, la trifloxystrobine, la picoxystrobine, l'époxiconazole, le prothioconazole, le myclobutanil, le tébuconazole, le propiconazole, le cyproconazole, le fenbuconazole, le boscalide, le penthiopyrad, le bixafène, l'isopyrazam, le sédaxane, le fluopyram, le thifluzamide ou des associations de ceux-ci.

7. Procédé selon la revendication 1, dans lequel la composition comprend en outre un insecticide.

8. Procédé selon la revendication 1, dans lequel la composition comprend en outre un herbicide.

9. Procédé selon la revendication 1, dans lequel l'inhibiteur Qi est le picolinamide UK-2A, 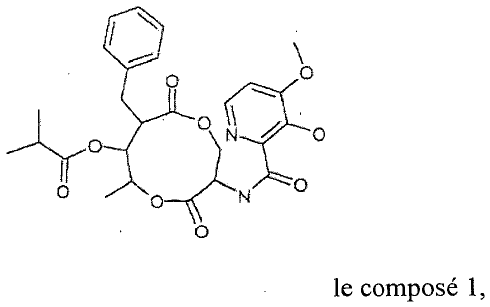 l' antimycine A, 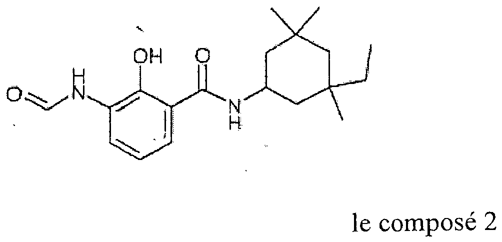 ou
